(19) Europäisches Patentamt

European Patent Office

Office européen des brevets

(11) EP 0 884 084 A2

(12) **EUROPÄISCHE PATENTANMELDUNG**

(43) Veröffentlichungstag:
16.12.1998 Patentblatt 1998/51

(51) Int. Cl.⁶: **B01D 53/04**, B01D 53/56

(21) Anmeldenummer: 98110344.3

(22) Anmeldetag: 05.06.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 09.06.1997 DE 19724286

(71) Anmelder:
Linde Aktiengesellschaft
65189 Wiesbaden (DE)

(72) Erfinder:
• Wenning, Ulrike, Dr.
85757 Karlsfeld (DE)
• Neumann, Hartmut
80797 München (DE)

(54) **Verfahren zur Entfernung von Stickoxiden aus Gasen**

(57) Die Erfindung betrifft ein Verfahren zur Entfernung von Stickoxiden aus einem Fluid, wobei das Fluid die Einsatzluft oder ein Produkt oder Produktgemisch oder ein Prozeßfluid einer Luftzerlegungsanlage ist. Erfindungsgemäß werden die Stickoxide durch Chemisorption an Metalloxiden entfernt.

Die Metalloxide sind bevorzugt aus Metallen der 6. bis 8. Nebengruppe gebildet, wobei Braunstein ($MnO_2$) als Metalloxid besonders bevorzugt wird. Das Verfahren kann ein oder mehrere Reaktorbetten enthalten, die bevorzugt bei 10 bis 40°C betrieben und mit Stickstoff einer Temperatur von 130 bis 170°C regeneriert werden. Das Verfahren kann zur Gewinnung von Reinstgasen, beispielsweise für die Halbleiterfertigung, eingesetzt werden.

EP 0 884 084 A2

**Beschreibung**

Die Erfindung betrifft ein Verfahren zur Entfernung von Stickoxiden aus einem Fluid, wobei das Fluid die Einsatzluft oder ein Produkt oder Produktgemisch oder ein Prozeßfluid einer Luftzerlegungsanlage ist.

Die Notwendigkeit, Stickoxide aus solchen Gasströmen zu entfernen, besteht deshalb, weil die Anforderungen an die Reinheit der Produkte einer Luftzerlegungsanlage (LZA) immer höher werden. Dies gilt insbesondere für Anwender dieser Produkte, wie beispielsweise Hersteller von Halbleitern. Insbesondere bei tiefen Temperaturen unter 0°C, wie sie im Tieftemperaturteil einer LZA auftreten, findet außerdem mit dem Luftsauerstoff eine Umsetzung des NO zu $N_2O_3$ mit einem Siedepunkt bei -102°C und zu $N_2O_4$ mit einem Siedepunkt bei -11°C statt, und diese Stickoxide können sich im Tieftemperaturteil der LZA anreichern und in fester Form zu Verlegungen führen. Auch werden an Industriestandorten häufig erhöhte Stickoxidgehalte in der Luft gemessen und müssen bei der Auslegung der LZA mit bis zu 6 mol ppm in der Ansaugluft zugrundegelegt werden.

Ein Teil der Stickoxide kann bei einer Vorreinigung der Luft entfernt werden und gelangt in dem Fall nicht in den Tieftemperaturteil der LZA. Aber auch dann kann ein kleiner Teil zu Verlegungen führen oder zur Verunreinigung der Produkte der LZA beitragen.

Wird zur Vorreinigung eine Adsorptionsanlage eingesetzt, so ist die Adsorbensmenge entsprechend den Verunreinigungen in der Luft hauptsächlich nach der $CO_2$-Konzentration zu bemessen und NO wird nicht vollständig adsorbiert. Auch neigt NO dazu, mit anderen chemischen Verbindungen, z.B. ungesättigten Kohlenwasserstoffen oder $NH_3$, explosionsfähige Verbindungen zu bilden, die zu Schäden in der LZA führen können. Außerdem bilden die Stickoxide zusammen mit der Luftfeuchte Säuren, die das Adsorbens und andere Teile der LZA schädigen können. Diese Säuren führen zu einer Alterung der zur Reinigung der Luft eingesetzten Adsorberschüttung und zur Korrosion in der Anlage.

Aufgabe der Erfindung ist es deshalb, die negativen Auswirkungen der Stickoxide in der LZA zu verhindern.

Diese Aufgabe wird erfindungsgemäß gelöst von einem Verfahren, bei dem die Stickoxide durch Chemisorption an Metalloxiden entfernt werden. Besonders vorteilhafte Ausführungen der Erfindung sind Gegenstand von Unteransprüchen.

Die Entfernung von Stickoxiden aus Gasen ist an sich bekannt. In der Druckschrift: Hamid Arastoopour und Hossein Hariri, $NO_x$ Removal with High - Capacity Metall Oxides in the Presence of Oxygen, Ind. Eng. Chem. Process Des. Dev. 1981, 20, Seite 223-228 ist ein Verfahren zur Reinigung von Rauchgasen beschrieben. Hierfür wird die Chemisorption von Stickstoffmonoxid an Braunstein beruhend auf folgender chemischen Reaktionsgleichung ausgenutzt:

$$MnO_2 + 2NO + O_2 \leftrightarrow Mn\,(NO_3)_2$$

Dabei liegt das Gleichgewicht bei hohen Temperaturen (T>100-150°C) auf der linken Seite der Gleichung, wodurch thermisches Regenerieren ermöglicht wird.

Neben der bei Arastoopour genannten Reaktion ist auch die folgende chemische Reaktion des Braunsteins mit Stickstoffdioxid möglich:

$$MnO_2 + 2NO_2 \leftrightarrow Mn\,(NO_3)_2$$

Das Verfahren ist in der genannten Druckschrift als nachteilig beschrieben, da die Absorptionsfähigkeit von $MnO_2$ gering ist. Dieser Nachteil ist jedoch für den Einsatz bei der Reinigung des Eintrittsgases und der Produkt- und Prozeßgase bei einer LZA nicht von Bedeutung, da die $NO_x$-Konzentration mit wenigen mol ppm wesentlich geringer ist als bei Rauchgasen mit z.B. 500-1000 mol ppm. Überraschenderweise kann aber auch bei niedrigen Konzentrationen mit hohem Wirkungsgrad $NO_x$ entfernt werden, obwohl von der kinetischen Seite betrachtet die Wahrscheinlichkeit für erfolgreiche Umsetzung um einen Faktor $>10^4$ geringer ist.

Die Reinigung von Luft oder aus der Luft gewinnbaren Gasen von Stickoxidvetunreinigungen im Bereich weniger mol ppm bei Temperaturen unter 100°C bis in den Bereich der Umgebungstemperatur in einem Reaktor mit $MnO_2$ hat der Fachmann bisher nicht erwogen. Unter Kostengesichtspunkten ist der Betrieb bei umgebungstemperatur jedoch interessant. Laborversuche, z.B. mit dem Katalysator T 2525 der Fa. Südchemie, der aus $MnO_2$ auf Aluminiumoxid besteht, und mit anderen $MnO_2$-haltigen Katalysatoren mit einem anderen Trägermaterial, haben überraschend gezeigt, daß Spuren von NO mit hoher Ausbeute bei Umgebungstemperatur absorbiert werden.

Das Trägergas kann auch Sauerstoff sein oder enthält vorzugsweise zumindest Sauerstoffspuren, da Sauerstoff die Chemisorption von Stickoxiden begünstigt. Es kann beispielsweise auch ein Edelgas sein.

Im erfindungsgemäßen Verfahren können vorteilhaft Metalloxide aus Metallen der 6. bis 8. Nebengruppe des Periodensystems, insbesondere handelsübliche Katalysatoren, verwendet werden. Bevorzugt wird Mangandioxid allein oder als Oxidgemisch aus besagten Metallen eingesetzt, das bevorzugt auf Partikeln mit einem Trägermaterial wie Aluminiumoxid oder Siliziumoxid aufgebracht ist.

Für die Absorption von Stickoxiden ist eine Betriebstemperatur unter 100°C, bevorzugt zwischen 0 und 100°C vorteilhaft, besonders vorteilhaft ist eine solche zwischen 3 und 40°C.

Günstige Raumgeschwindigkeiten für die Chemisorption von Stickoxiden liegen zwischen 300 $h^{-1}$ und 12000 $h^{-1}$, insbesondere zwischen 500 und 8000 $h^{-1}$.

Im vom Verfahrensgas durchströmten Reaktorbett findet die Chemisorption der Stickoxide an $MnO_2$ statt, das hierbei zu $Mn(NO_3)_2$ umgesetzt wird. Die Entfernung von Stickoxiden wird mit Vorteil in einem oder mehreren Reaktorbetten durchgeführt, die Braunstein oder ein braunsteinhaltiges oder mit Braunstein beschichtetes Material enthalten, wobei das Reaktorbett die Chemisorption der Stickoxide bewirkt und vor Erreichen einer Grenzbeladung regeneriert wird.

Vorteilhafterweise wird zum Regenerieren das Reaktorbett mit warmem in diesem Zusammenhang nicht reaktiv wirkendem Gas, vorzugsweise Stickstoff, mit einer Temperatur von 100 bis 300°C, vorzugsweise 130 bis 170°C, durchströmt.

Die Ausgestaltung der Vorrichtung zur Entfernung von Stickoxiden aus Gasen hängt von Randbedingungen der Anwendung ab. Zur Entfernung von Spuren von Stickoxiden in Größenordnungen unter 0,1 mol ppm, oder wenn Stickoxide sich nur sporadisch im Trägergas befinden oder wenn entsprechend lange Pausen im Betrieb dies erlauben, kann mit Vorteil ein einziges Reaktorbett eingesetzt werden.

Wenn ein kontinuierlicher Betrieb der Vorrichtung notwendig ist, werden vorteilhaft mehrere, mindestens jedoch zwei, Reaktorbetten eingesetzt. Mindestens ein Reaktorbett übernimmt hierzu die Chemisorption, das oder die anderen Reaktorbetten werden regeneriert. Die eingesetzten Reaktorbetten übernehmen nacheinander die Chemisorption, so daß eine kontinuierliche Stickoxidentfernung ermöglicht wird.

Das Metalloxid kann in Form von Partikeln so eingesetzt werden, daß die Partikel im Bett eines Reaktors, Absorbers oder bevorzugt eines Adsorbers eine Schicht bilden oder mit anderen Partikeln des Bettes vermischt werden. Der Vorteil besteht darin, daß ein einziges Bett mehrere Funktionen erfüllt oder sogar, falls es sich um ein Adsorberbett handelt, zusammen mit Partikeln des Adsorbers regeneriert werden kann.

Das Verfahren kann mit Vorteil zur Gewinnung von Reinstgasen, beispielsweise für die Halbleiterfertigung, eingesetzt werden. Reaktive Bestandteile, wie die Stickoxide müssen bis auf Spuren im unteren mol ppb-Bereich aus solchen Reinstgasen entfernt werden.

Beispiel 1

Mit einem $MnO_2$-haltigen Katalysator der Fa. Südchemie, Typ 2525 mit $MnO_2$ auf $Al_2O_3$, ergeben Laborversuche bei Raumtemperatur und Atmosphärendruck und mit den Daten:

| | |
|---|---|
| Raumgeschwindigkeit | ca. 4000 $h^{-1}$ |
| NO-Gehalt | 20 mol ppb |
| $O_2$-Gehalt | 500 mol ppm |
| Rest | $N_2$, CO, $H_2$, Kohlenwasserstoffe |

nach 200 Betriebsstunden eine NO-Entfernung bis auf einen restlichen NO-Gehalt von 2 mol ppb. Die Raumgeschwindigkeit von etwa 4000 $h^{-1}$ wurde bei diesem Laborversuch so eingestellt, daß etwa 100 l/h des NO-haltigen Gases über 25 ml $MnO_2$-haltiges Material geleitet wurden. Prinzipiell sind mit anderen Betriebsdaten auch geringere NO-Restgehalte zu erreichen.

Patentansprüche

1. Verfahren zur Entfernung von Stickoxiden aus einem Fluid, wobei das Fluid die Einsatzluft oder ein Produkt oder Produktgemisch oder ein Prozeßfluid einer Luftzerlegungsanlage ist, **dadurch gekennzeichnet**, daß die Stickoxide durch Chemisorption an Metalloxiden entfernt werden.

2. Verfahren nach Anspruch 1, dadurch gekennzeichnet, daß das Fluid insbesondere auch Stickstoff oder Sauerstoff sein kann oder Sauerstoff enthält oder ein Edelgas ist.

3. Verfahren nach einem der Ansprüche 1 oder 2, dadurch gekennzeichnet, daß die Metalle, aus denen die Metalloxide gebildet sind, Metalle der 6. bis 8. Nebengruppe sind, vorzugsweise jedoch Mangandioxid allein oder als Oxidgemisch aus besagten Metallen eingesetzt wird, das besonders bevorzugt auf Partikeln mit einem Trägermaterial wie Aluminiumoxid oder Siliziumoxid aufgebracht wird.

4. Verfahren nach einem der Ansprüche 1 bis 3, dadurch gekennzeichnet, daß die Stickoxidentfernung bei einer Temperatur unter 100°C, vorzugsweise bei einer Temperatur zwischen 0 und 100°C, besonders bevorzugt zwischen 3 und 40°C, vorgenommen wird.

5. Verfahren nach einem der Ansprüche 1 bis 4, dadurch gekennzeichnet, daß die Stickoxidentfemung bei einer Temperatur unter 100°C, bevorzugt bei einer Raumgeschwindigkeit zwischen 300 und 12000 $h^{-1}$, besonders bevorzugt zwischen 500 und 8000 $h^{-1}$, vorgenommen wird.

6. Verfahren nach einem der Ansprüche 1 bis 5, dadurch gekennzeichnet, daß die Entfernung von Stickoxiden in einem oder mehreren Reaktorbetten, die Braunstein oder ein Braunstein-haltiges oder mit Braunstein beschichtetes Material enthalten, durchgeführt wird, wobei das Reaktorbett die Chemisorption der Stickoxide bewirkt und vor Erreichen einer Grenzbeladung regeneriert wird.

7. Verfahren nach Anspruch 6, dadurch gekennzeichnet, daß das zu regenerierende Reaktorbett von einem dabei nicht reaktiven Gas, vorzugsweise Stickstoff, durchströmt wird, dessen Temperatur bei 100 bis 300°C, vorzugsweise jedoch bei 130 bis 170°C liegt.

8. Verfahren nach Anspruch 7, dadurch gekennzeichnet, daß nur ein Reaktorbett eingesetzt wird, wenn Stickoxide sich in Spuren von weniger als 0,1 mol ppm oder nur kurzfristig im Trägergas befinden, oder wenn bei der Anwendung des Verfahrens Pausen im Betrieb das Regenerieren des Reaktorbettes ermöglichen.

9. Verfahren nach Anspruch 7, dadurch gekennzeichnet, daß mehrere, mindestens jedoch zwei, Reaktorbetten so geschaltet werden, daß ein kontinuierlicher Betrieb der Entfernung von Stickoxiden erreicht wird, indem die Reaktorbetten abwechselnd die Chemisorption der Stickoxide übernehmen, während gleichzeitig das oder die anderen Reaktorbetten regeneriert werden.

10. Verfahren nach einem der Ansprüche 1 bis 9, dadurch gekennzeichnet, daß das Metalloxid in Form von Partikeln so eingesetzt wird, daß die Partikel im Bett eines Reaktors, Absorbers oder bevorzugt eines Adsorbers eine Schicht bilden oder mit anderen Partikeln des Bettes vermischt werden.

11. Anwendung des Verfahrens nach einem der Ansprüche 1 bis 10 zur Gewinnung von Reinstgasen.

12. Anwendung nach Anspruch 11, dadurch gekennzeichnet, daß besagtes Reinstgas für die Halbleiterfertigung bestimmt ist.